# EUROPÄISCHE PATENTSCHRIFT

(11) **EP 4 334 793 B1**
(45) Veröffentlichungstag und Bekanntmachung des Hinweises auf die Patenterteilung: **12.02.2025**
(21) Anmeldenummer: 23748975.2
(22) Anmeldetag: 25.07.2023
(51) Int. Cl.: G05D 16/20

(54) **VERFAHREN ZUM STEUERN EINES REINIGUNGSSYSTEMS FÜR KRAFTFAHRZEUGKOMPONENTEN, REINIGUNGSSYSTEM FÜR KRAFTFAHRZEUGKOMPONENTEN UND KRAFTFAHRZEUG MIT REINIGUNGSSYSTEM FÜR KRAFTFAHRZEUGKOMPONENTEN**
METHOD FOR CONTROLLING A CLEANING SYSTEM FOR MOTOR VEHICLE COMPONENTS, CLEANING SYSTEM FOR MOTOR VEHICLE COMPONENTS, AND MOTOR VEHICLE WITH A CLEANING SYSTEM FOR MOTOR VEHICLE COMPONENTS
PROCÉDÉ DE COMMANDE D'UN SYSTÈME DE NETTOYAGE DE COMPOSANTS DE VÉHICULES À MOTEUR, SYSTÈME DE NETTOYAGE DE COMPOSANTS DE VÉHICULES À MOTEUR ET VÉHICULE À MOTEUR ÉQUIPÉ D'UN SYSTÈME DE NETTOYAGE DE COMPOSANTS DE VÉHICULES À MOTEUR

(30) Priorität: 27.07.2022 DE 102022118856
(43) Veröffentlichungstag der Anmeldung: 13.03.2024
(73) Patentinhaber: Kautex Textron GmbH & Co. KG, 53229 Bonn (DE)
(72) Erfinder: BEHR, Christian, 53225 Bonn (DE); MÜLLER, René Erich, 53121 Bonn (DE)
(74) Vertreter: Richly & Ritschel Patentanwälte PartG mbB
(86) Internationale Anmeldenummer: PCT/EP2023/070605
(87) Internationale Veröffentlichungsnummer: WO 2024/023100

(56) Entgegenhaltungen:
- DE-A1- 102020 202 570
- US-A- 4 932 840
- US-A1- 2016 167 066
- US-A1- 2019 143 355
- US-A1- 2019 275 990
- US-A1- 2023 088 016

## Beschreibung

Die vorliegende Erfindung betrifft ein Verfahren zum Steuern eines Reinigungssystems für Kraftfahrzeugkomponenten. Ferner betrifft die vorliegende Erfindung ein Reinigungssystem für Kraftfahrzeugkomponenten zum Ausführen des Verfahrens. Weiterhin betrifft die vorliegende Erfindung ein Kraftfahrzeug mit einem Komponentenreinigungssystem.

Kraftfahrzeuge und insbesondere Kraftfahrzeuge, die zum autonomen bzw. teilautonomen Fahren ausgebildet sind, weisen üblicherweise eine Vielzahl von Sensoren auf, mittels denen die Umgebung und/oder eine Fahrsituation des Kraftfahrzeugs überwachbar ist. Diese als Kraftfahrzeugsensoren ausgebildeten Kraftfahrzeugkomponenten können beispielsweise optische Sensoren, Kameras, Radar-Sensoren oder Lidar-Sensoren aufweisen.

Zur Gewährleistung der Funktionsfähigkeit und Einsatzbereitschaft von Kraftfahrzeugkomponenten und insbesondere von Kraftfahrzeugsensoren ausgebildeten Kraftfahrzeugkomponenten müssen diese regelmäßig gereinigt werden. Je nach Kraftfahrzeugkomponente oder je nach Sensorart und je nach Verschmutzungsgrad muss eine Reinigungseinrichtung (Reinigungsdüse) eines Reinigungssystems die betreffende Komponente und/oder den betreffenden Sensor entsprechend einer Reinigungsanfrage mit einem Reinigungsfluid mit einem vorbestimmten Fluiddruck für eine vorbestimmte Zeit beaufschlagen.

Bisher sind Reinigungssysteme angedacht, die eine Vielzahl von Drucksensoren oder Durchflusssensoren aufweisen, die üblicherweise jeweils einer Reinigungsdüse zugeordnet sind. Diese Vielzahl von Drucksensoren oder Durchflusssensoren sind im Reinigungssystem derart angeordnet und dazu ausgebildet, die Fluiddrücke bzw. die Durchflussmenge des Reinigungsfluids, das aus den jeweiligen Reinigungsdüsen ausgegeben werden, zu bestimmen. Mittels dieser Fluiddruckinformationen wird eine zentrale Fluidfördereinrichtung (Pumpe) derart gesteuert, dass einer Reinigungsanforderung erfüllt wird.

Die aus dem Stand der Technik bekannten Reinigungssysteme weisen folglich eine Vielzahl von Bauteilen und insbesondere eine Vielzahl von Drucksensoren und/oder Durchflusssensoren auf. Hierdurch sind diese Reinigungssysteme fehleranfällig und kostenintensiv. Die Verfahren zum Steuern der entsprechenden Reinigungssysteme sind entsprechend aufwendig.

US 2019/275990 A1 zeigt ein Verfahren zum Steuern eines Reinigungssystems für Kraftfahrzeugkomponenten nach dem Oberbegriff des Anspruchs 1.

Der vorliegenden Erfindung liegt die Aufgabe zugrunde, ein Verfahren zum Steuern eines Reinigungssystems für Kraftfahrzeugkomponenten bereitzustellen, welches eine vereinfachte Steuerung des Reinigungssystems ermöglicht und es ferner ermöglicht, dass das Reinigungssystem weniger fehleranfällig und weniger kostenintensiv ist.

Die der vorliegenden Erfindung zugrundeliegende Aufgabe wird durch ein Verfahren mit den Merkmalen von Anspruch 1 gelöst. Ausgestaltungen des Verfahrens sind in den von Anspruch 1 abhängigen Ansprüchen beschrieben.

Im Genaueren wird die der vorliegenden Erfindung zugrundeliegende Aufgabe durch ein Verfahren zum Steuern eines Reinigungssystems für Kraftfahrzeugkomponenten gelöst, wobei das Reinigungssystem eine Fluidfördereinrichtung, einen Drucksensor zum Bestimmen eines von der Fluidfördereinrichtung erzeugten Drucks und eine Fluidverteilungseinrichtung mit zumindest einem mit der Fluidfördereinrichtung fluidverbundenen Eingangsanschluss und mit zumindest zwei mit dem Eingangsanschluss fluidverbundenen Ausgabeanschlüssen, wobei jeder Ausgabeanschluss zwischen einer Offenstellung und einer Schließstellung verstellbar ist, zumindest zwei jeweils über einen Leitungsstrang mit jeweils einem Ausgabeanschluss fluidverbundenen Reinigungseinrichtungen, und eine Steuerungseinrichtung aufweist, die mit der Fluidfördereinrichtung und der Fluidverteilungseinrichtung zum Übertragen und/oder Empfangen von Signalen datengekoppelt ist. Das erfindungsgemäße Verfahren weist folgende Verfahrensschritt auf:
- Ermitteln einer Reinigungsanforderung für alle Reinigungseinrichtungen;
- Ermitteln eines Drucksollwertes für zumindest eine erste Reinigungseinrichtung;
- Einstellen der Ausgabeanschlüsse der Fluidverteilungseinrichtung in deren Offenstellung oder in deren Schließstellung entsprechend der Reinigungsanforderung;
- Ermitteln eines Ist-Fluiddrucks, der von der Fluidfördereinrichtung erzeugt wird;
- Bestimmen einer Gesamtflussrate, die von der Fluidfördereinrichtung gefördert wird, basierend auf dem Ist-Fluiddruck;
- Bestimmen einer ersten Flussrate durch die erste Reinigungseinrichtung basierend auf der Gesamtflussrate;
- Bestimmen eines ersten Druckverlustes in einem Leitungsstrang, über den die erste Reinigungseinrichtung mit der Fluidfördereinrichtung fluidverbunden ist, unter Berücksichtigung der ersten Flussrate;
- Bestimmen eines Druckregelwertes basierend auf dem Drucksollwert und dem ersten Druckverlust; und
- Einstellen der Fluidfördereinrichtung derart, dass ein von der Fluidfördereinrichtung bereitgestellter Fluiddruck in Richtung des Druckregelwertes verändert wird.

Das erfindungsgemäße Verfahren weist den Vorteil auf, dass ein Reinigungssystem für Kraftfahrzeugkomponenten erheblich vereinfacht ausgestaltet sein kann. Insbesondere kann das Reinigungssystem eine erheblich verminderte Anzahl von Überwachungseinrichtungen zum Überwachen von Reinigungsdrücken und/oder Reinigungsmengen, die von den einzelnen Reinigungseinrichtungen des Reinigungssystems bereitgestellt werden müssen, um ein gefordertes Reinigungsergebnis zu gewährleisten, ermöglichen. Denn das Verfahren ermöglicht eine zentrale Bestimmung eines Reinigungsdrucks an einer Stelle des Reinigungssystems, wobei die Reinigungsdrücke bzw. die Reinigungsmengen an den jeweiligen Reinigungseinrichtungen interpoliert berechnet werden.

Die Kraftfahrzeugkomponenten können beispielsweise als Kraftfahrzeugsensoren ausgebildet sein bzw. Kraftfahrzeugsensoren aufweisen, die wiederum beispielsweise optische Sensoren aufweisen können. Beispielsweise können die Kraftfahrzeugsensoren zumindest eine Kamera und/oder zumindest ein Lidar-Sensor aufweisen. Ferner können die Kraftfahrzeugsensoren einen Radar-Sensor aufweisen. Die Kraftfahrzeugkomponenten können auch als beispielsweise Windschutzscheiben, Heckscheiben, Scheinwerfern, Rückleuchten, Warnhinweisbeleuchtungen und/oder weitere Beleuchtungseinrichtungen ausgebildet sein oder diese aufweisen.

Die Fluidfördereinrichtung kann auch als Fluidpumpe oder einfach als Pumpe bezeichnet werden. Die Fluidfördereinrichtung weist zumindest einen Fluideingangsanschluss auf, über den die Fluidfördereinrichtung mit einem Reinigungsfluid versorgt wird. Beispielsweise ist die Fluidfördereinrichtung mittels des Fluideingangsanschlusses mit einem Reinigungsbehälter fluidverbunden, wobei in dem Reinigungsbehälter ein Reinigungsfluid einfüllbar ist. Die Fluidfördereinrichtung weist ferner zumindest einen Fluidausgabeanschluss auf, über den das Reinigungsfluid druckbeaufschlagt ausgegeben werden kann.

Die Fluidfördereinrichtung kann auch zwei oder mehr als zwei Fluidausgabeanschlüsse aufweisen, die vorzugsweise jeweils zwischen einer Offenstellung und einer Schließstellung verstellbar sind.

Die Fluidverteilungseinrichtung dient einer Verteilung des von der Fluidfördereinrichtung bereitgestellten Reinigungsfluids für die Reinigungseinrichtungen des Reinigungssystems. Die Fluidverteilungseinrichtung kann auch als Ventilblock bezeichnet werden.

In der Offenstellung eines Ausgabeanschlusses der Fluidverteilungseinrichtung ist eine Fluidförderung vom Eingangsanschluss der Fluidverteilungseinrichtung durch den betreffenden Ausgabeanschluss ermöglicht, wohingegen in der Schließstellung eines Ausgabeanschlusses eine Fluidförderung von dem Eingangsanschluss durch den betreffenden Ausgabeanschluss unterbunden ist. Vorzugsweise sind die jeweiligen Ausgabeanschlüsse diskret zwischen deren Offenstellung und deren Schließstellung verstellbar, d.h., dass in der Offenstellung eines Ausgabeanschlusses dieser komplett geöffnet ist, wohingegen in der Schließstellung eines Ausgabeanschlusses dieser komplett geschlossen ist.

Die Fluidverteilungseinrichtung weist vorzugsweise mehr als zwei Ausgabeanschlüsse auf. Beispielsweise weist die Fluidverteilungseinrichtung drei, vier, fünf, sechs oder mehr Ausgabeanschlüsse auf. Erfindungsgemäß bestehen hinsichtlich der Anzahl der Ausgabeanschlüsse keine Beschränkungen.

Die Reinigungseinrichtungen sind vorzugsweise als Reinigungsdüsen ausgebildet. Vorzugsweise weist das Reinigungssystem eine der Anzahl der Ausgabeanschlüsse entsprechende Anzahl von Reinigungseinrichtungen auf.

Jede Reinigungseinrichtung kann über jeweils einen Leitungsstrang, der auch als Fluidleitung bezeichnet werden kann, mit einem Ausgabeanschluss der Fluidverteilungseinrichtung fluidverbunden sein. Beispielsweise kann eine erste Reinigungseinrichtung mittels eines ersten Leitungsstrangs mit einem ersten Ausgabeanschluss, eine zweite Reinigungseinrichtung mittels einem zweiten Leitungsstrangs mit einem zweiten Ausgabeanschluss usw. fluidverbunden sein.

Das Reinigungsfluid bzw. das Fluid ist vorzugsweise eine Flüssigkeit, beispielsweise Wasser und/oder eine Reinigungslösung. Folglich kann die Fluidfördereinrichtung auch als Flüssigkeitsfördereinrichtung bzw. als Flüssigkeitspumpe bezeichnet werden.

Die Steuerungseinrichtung ist vorzugsweise auch mit dem Drucksensor zum Übertragen und/oder Empfangen von Signalen datengekoppelt.

Vorzugsweise ist die Fluidfördereinrichtung mit dem Drucksensor zum Übertragen und/oder Empfangen von Signalen datengekoppelt.

Bei dem Verfahrensschritt der Ermittlung der Reinigungsanforderung für alle Reinigungseinrichtungen werden Anforderungsinformationen ermittelt, welche Informationen enthalten, welche Ausgabeanschlüsse geöffnet werden sollen. D.h., dass die Anforderungsinformation Information darüber enthalten, welche der Kraftfahrzeugkomponenten zu reinigen sind. Ferner enthält die Reinigungsanforderung Informationen über den aus den jeweiligen Reinigungseinrichtungen auszugebenden Fluiddruck und optional der Dauer, wie lange Reinigungsfluid aus den jeweiligen Reinigungseinrichtungen auszugeben ist. Beispielsweise wird die Reinigungsanforderung ermittelt, indem diese empfangen wird.

Beispielsweise kann die Reinigungsanforderung Informationen enthalten, dass ein erster Kraftfahrzeugsensor mit Reinigungsfluid mit einem Fluiddruck von 3 bar für eine Dauer von einer Sekunde, ein zweiter Kraftfahrzeugsensor mit keinem Reinigungsfluid und ein dritter Kraftfahrzeugsensor mit Reinigungsfluid mit einem Fluiddruck von 2.7 bar für eine Dauer von zwei Sekunden beaufschlagt werden sollen.

Der Druck an der Reinigungsdüse bestimmt automatisch die Flussrate durch die Reinigungsdüse.

Bei dem Verfahrensschritt der Ermittlung eines Drucksollwerts für zumindest eine erste Reinigungseinrichtung wird dieser Drucksollwert im Verlauf der iterativen Ausführung des Verfahrens erreicht. Das Ermitteln des Drucksollwerts kann durch Auslesen der Reinigungsanforderung erfolgen.

Bei dem Verfahrensschritt der Ermittlung eines Drucksollwerts für zumindest eine erste Reinigungseinrichtung können vorzugsweise eine Mehrzahl von Drucksollwerten ermittelt werden. Basierend auf dieser Mehrzahl von Drucksollwerten kann ein Drucksollwert berechnet werden, der den weiteren Verfahrensschritten als Grundlage dient. Beispielsweise kann ein Mittelwert von ermittelten Drucksollwerten für als Drucksollwert übernommen werden.

Der durch Mittelwertbildung der Drucksollwerte ermittelte Drucksollwert kann auch als Ziel-Drucksollwert bezeichnet werden.

Bei dem Verfahrensschritt der Einstellung der Ausgabeanschlüsse der Fluidverteilungseinrichtung in deren Offenstellung oder in deren Schließstellung werden die Ausgabeanschlüsse vorzugsweise diskret in deren Offenstellung oder in deren Schließstellung überführt. Dies bedeutet, dass es vorzugsweise keine Zwischenstellungen der jeweiligen Ausgabeanschlüsse gibt. Wenn beispielsweise eine Reinigungsanforderung ermittelt wird, gemäß der ein erster Kraftfahrzeugsensor und ein dritter Kraftfahrzeugsensor, nicht jedoch ein zweiter Kraftfahrzeugsensor gereinigt werden sollen, werden der erste und der dritte Ausgabeanschluss in ihre jeweiligen Offenstellungen und der zweite Ausgabeanschluss in dessen Schließstellung überführt.

Die drei zuvor beschriebenen Verfahrensschritte werden vorzugsweise pro Reinigungsauftrag bzw. bis zur Beendigung eines Reinigungsauftrags einmalig ausgeführt. Die folgend beschriebenen Verfahrensschritte werden vorzugsweise sooft ausgeführt, bis eine Differenz des ersten Drucksollwerts und des von der Fluidfördereinrichtung bereitgestellten Fluiddrucks einen vorbestimmten Grenzwert unterschreiten.

Bei dem Verfahrensschritt zur Ermittlung des Ist-Fluiddrucks wird der von der Fluidfördereinrichtung erzeugte Fluiddruck zum Zeitpunkt der Ermittlung ermittelt. Bei fortschreitenden Iterationsschritten des Verfahrens gleicht sich der Ist-Fluiddruck einer Regelsollgröße an, wobei sich die Regelsollgröße durch Addition des Drucksollwerts (Ziel-Drucksollwert) und dem ersten Druckverlust ergibt. Der Ist-Fluiddruck wird mittels des Drucksensors ermittelt bzw. bestimmt.

Die von der Fluidfördereinrichtung geförderte Gesamtflussrate ist proportional zu dem Ist-Fluiddruck, so dass basierend auf dem Ist-Fluiddruck die Gesamtflussrate bestimmt werden kann.

Die Bestimmung der Gesamtflussrate erfolgt vorzugsweise mittels einer Berechnung der Gesamtflussrate.

Die Bestimmung der ersten Flussrate durch die erste Reinigungseinrichtung ist abhängig von der von der Fluidfördereinrichtung bereitgestellte Gesamtflussrate, die sich auf die Reinigungseinrichtungen aufteilt, die einem sich in Offenstellung befindlichen Ausgabeanschluss der Fluidverteilungseinrichtung zugeordnet sind. Daher ist es möglich, die erste Flussrate durch die erste Reinigungseinrichtung basierend auf der Gesamtflussrate zu bestimmen.

Bei dem Verfahrensschritt der Bestimmung der ersten Flussrate durch die erste Reinigungseinrichtung kann zusätzlich noch zumindest eine weitere Flussrate durch zumindest eine weitere Reinigungseinrichtung basierend auf der Gesamtflussrate bestimmt werden.

Die Bestimmung des ersten Druckverlustes ist abhängig von der ersten Flussrate durch die erste Reinigungseinrichtung. Der Leitungsstrang, über den die erste Reinigungseinrichtung mit der Fluidfördereinrichtung, im Genaueren mit dem Fluidausgabeanschluss der Fluidfördereinrichtung fluidverbunden ist, weist beispielsweise eine Sammelfluidleitung von dem Fluidausgabeanschluss zu der Fluidverteilungseinrichtung, die Fluidverteilungseinrichtung, eine erste Fluidleitung, über die ein erster Ausgabeanschluss der Fluidverteilungseinrichtung mit der ersten Reinigungseinrichtung fluidverbunden ist, und die erste Fluidverteilungseinrichtung auf. Die Bestimmung des ersten Druckverlustes erfolgt vorzugsweise mittels einer Berechnung.

Im Verfahrensschritt zur Bestimmung bzw. Berechnung des Druckregelwertes wird der Druckwert ermittelt, den die Fluidfördereinrichtung erzeugen soll, damit Reinigungsfluid mit dem Drucksollwert aus der ersten Reinigungseinrichtung ausgegeben werden kann. Der Druckregelwert wird beispielsweise durch Addition des Drucksollwertes und des ersten Druckverlustes berechnet.

Bei dem Verfahrensschritt des Einstellens der Fluidfördereinrichtung derart, dass ein von der Fluidfördereinrichtung bereitgestellte Fluiddruck in Richtung des Druckregelwertes verändert wird, wird eine Leistungsstufe der Fluidfördereinrichtung entsprechend angepasst. Die Leistungsstufe der Fluidfördereinrichtung kann beispielsweise eine Drehzahl der Fluidfördereinrichtung sein.

Vorzugsweise ist das Verfahren derart ausgebildet, dass der Verfahrensschritt des Bestimmens einer Gesamtflussrate, die von der Fluidfördereinrichtung gefördert wird, unter Verwendung einer Leistungsstufeninformation der Fluidfördereinrichtung erfolgt.

Das entsprechend ausgebildete Verfahren weist den Vorteil auf, dass die von Fluidfördereinrichtung geförderte Gesamtflussrate mit einer verbesserten Genauigkeit bestimmt werden kann.

Die Leistungsstufe der Fluidfördereinrichtung kann beispielsweise eine Drehzahl der Fluidfördereinrichtung sein. Bei bestimmten Fluidfördereinrichtungen ist eine Drehzahl der Fluidfördereinrichtung proportional zu der mittels der Fluidfördereinrichtung förderbaren Fluidflussrate. Beispielsweise bei als Kreiselpumpen oder als bürstenlosen Gleichstrompumpen ausgebildeten Fluidfördereinrichtungen ist die Drehzahl der Gleichstrompumpe proportional zu der mittels der Gleichstrompumpe förderbaren Fluidflussrate.

Vorzugsweise ist das Verfahren derart ausgebildet, dass der Verfahrensschritt des Bestimmens einer Gesamtflussrate, die von der Fluidfördereinrichtung gefördert wird, unter Verwendung eines Kennfeldes der Fluidfördereinrichtung erfolgt, das für unterschiedliche Leistungsstufen der Fluidfördereinrichtung die von der Fluidfördereinrichtung erzielbare Gesamtflussrate in Abhängigkeit des Fluiddrucks angibt.

Das entsprechend ausgebildete Verfahren weist den Vorteil auf, dass die von Fluidfördereinrichtung geförderte Gesamtflussrate mit einer verbesserten Genauigkeit und schneller bestimmt werden kann.

Vorzugsweise ist das Verfahren derart ausgebildet, dass die Fluidfördereinrichtung auf die niedrigste Leistungsstufe eingestellt wird, mit der der Druckregelwert von der Fluidfördereinrichtung erzielbar ist.

Das entsprechend ausgebildete Verfahren weist den Vorteil auf, dass die Fluidfördereinrichtung nicht unnötigerweise auf zu großen Leistungsstufen betrieben wird. Dies senkt zum einen den Energieverbrauch und senkt die Geräuschentwicklung der Fluidfördereinrichtung.

Vorzugsweise ist das Verfahren derart ausgebildet, dass der Verfahrensschritt des Bestimmens der ersten Flussrate durch die erste Reinigungseinrichtung auch basierend auf Schaltstellungen der Ausgabeanschlüsse der Fluidverteilungseinrichtung erfolgt.

Das entsprechend ausgebildete Verfahren weist den Vorteil auf, dass die erste Flussrate durch die erste Reinigungseinrichtung mit erhöhter Genauigkeit bestimmt wird. Somit ist die Regelgenauigkeit des entsprechend ausgebildeten Verfahrens erheblich verbessert.

Das von der Fluidfördereinrichtung geförderte Reinigungsfluid teilt sich auf die Leitungsstränge auf, in denen die diesen Leitungssträngen zugeordneten Ausgabeanschlüsse der Fluidverteilungseinrichtung sich in deren jeweiligen Offenstellungen befinden. Dabei teilt sich die Gesamtflussrate entsprechend der Strömungswiderstände der sich flussabwärts der Ausgabeanschlüsse befindlichen Leitungsstränge auf. Wenn beispielsweise ein Strömungswiderstand eines der ersten Reinigungseinrichtung zugeordneten Leitungsstrangs kleiner ist als ein Strömungswiderstand eines der dritten Reinigungseinrichtung zugeordneten Leitungsstrangs, dann wird ein Reinigungsfluidstrom durch den der ersten Reinigungseinrichtung zugeordneten Leitungsstrang größer sein als eine Flussrate des Reinigungsfluidstroms durch den der dritten Reinigungseinrichtung zugeordneten Leitungsstrang.

Vorzugsweise ist das Verfahren derart ausgebildet, dass der Verfahrensschritt des Bestimmens der ersten Flussrate durch die erste Reinigungseinrichtung auch basierend auf einer ersten Umsetzungstabelle erfolgt, die die Verhältnisse der Flussraten durch die den jeweiligen Reinigungseinrichtungen zugeordneten Leitungspfaden in Abhängigkeit von Fluiddrücken angibt, die von der Fluidfördereinrichtung bereitgestellt werden.

Das entsprechend ausgebildete Verfahren weist den Vorteil auf, dass die Flussrate durch die erste Reinigungseinrichtung mit einem reduzierten Rechenaufwand bestimmt wird. Denn die erste Umsetzungstabelle, die auch als erste Look-Up-Tabelle bezeichnet werden kann, ist vorzugsweise in der Steuerungseinrichtung oder in einem anderen elektronischen Speicher gespeichert, so dass die Verhältnisse der Flussraten nicht immer bei jedem Iterationsschritt des Verfahrens neu berechnet werden muss.

In der ersten Umsetzungstabelle sind für eine Vielzahl von Fluiddrücken, die von der Fluidfördereinrichtung bereitgestellt werden, die Verhältnisse der Flussraten durch die den jeweiligen Reinigungseinrichtungen zugeordneten Leitungspfaden angegeben. Dabei sind diese Verhältnisse der Flussraten durch die den jeweiligen Reinigungseinrichtungen zugeordneten Leitungspfaden vorzugsweise auf Leitungspfad normiert, der unter sämtlichen Leitungspfaden die kleinste Flussrate bei einem vorgegebenen Druck aufweist. Dieser Leitungspfad wird vorzugsweise auf 1 normiert, so dass die Flussraten durch die anderen Leitungspfade entsprechend jeweils größer als 1 sind.

Nachfolgend ist ein Beispiel einer entsprechenden ersten Umsetzungstabelle angegeben:

| Ist-Fluiddruck | Fluss durch erste Reinigungseinrichtung | Fluss durch zweite Reinigungseinrichtung | Fluss durch dritte Reinigungseinrichtung |
|---|---|---|---|
| 2.5 bar | 2.54 | 1.68 | 1 (Referenz) |
| 3 bar | 2.7 | 1.75 | 1 (Referenz) |
| 3.5 bar | 2.8 | 1.85 | 1 (Referenz) |
| 4 bar | 2.9 | 1.9 | 1 (Referenz) |

Gemäß dieser beispielhaften ersten Umsetzungstabelle fließt bei einem von der Fluidfördereinrichtung erzeugten Ist-Fluiddruck von 3.5 bar durch die erste Reinigungseinrichtung 2.8 mal so viel Reinigungsfluid wie durch die dritte Reinigungseinrichtung. Durch die zweite Reinigungseinrichtung fließt 1.85 mal so viel Reinigungsfluid wie durch die dritte Reinigungseinrichtung.

Vorzugsweise ist das Verfahren derart ausgebildet, dass der Verfahrensschritt des Bestimmens der ersten Flussrate durch die erste Reinigungseinrichtung auch basierend auf zumindest einer zweiten Umsetzungstabelle erfolgt, wobei in einer zweiten Umsetzungstabelle die prozentualen Flussraten durch die den jeweiligen Reinigungseinrichtungen zugeordneten Leitungspfaden für alle Permutationen von Schaltstellungen sämtlicher Ausgabeanschlüsse der Fluidverteilungseinrichtung für einen von der Fluidfördereinrichtung bereitgestellten Fluiddruck angegeben sind.

Das entsprechend ausgebildete Verfahren weist den Vorteil auf, dass die Flussrate durch die erste Reinigungseinrichtung mit einem reduzierten Rechenaufwand bestimmt wird. Denn die zweite Umsetzungstabelle, die auch als zweite Look-Up-Tabelle bezeichnet werden kann, ist vorzugsweise in der Steuerungseinrichtung oder in einem anderen elektronischen Speicher gespeichert, so dass die Verhältnisse der Flussraten nicht immer bei jedem Iterationsschritt des Verfahrens neu berechnet werden muss.

Vorzugsweise sind für eine Vielzahl von von der Fluidfördereinrichtung bereitgestellten Fluiddrücken jeweils eine zweite Umsetzungstabelle vorhanden und in der Steuerungseinrichtung oder in einem anderen elektronischen Speicher gespeichert.

Für jede Permutation der Schaltstellungen sämtlicher Ausgabeanschlüsse der Fluidverteilungseinrichtung beträgt die Summe der der prozentualen Flussraten durch die den jeweiligen Reinigungseinrichtungen zugeordneten Leitungspfaden stets 100% der Gesamtflussrate, die von der Fluidfördereinrichtung gefördert wird.

Sowohl die erste Umsetzungstabelle als auch sämtliche zweiten Umsetzungstabellen können über eine Computersimulation ermittelt werden, in das Reinigungssystem digitalisiert ist. Ferner ist es auch möglich, dass die erste Umsetzungstabelle als auch sämtlich zweite Umsetzungstabellen über Vormessungen an dem konkreten Reinigungssystem ermittelt werden.

Nachfolgend ist ein Beispiel einer entsprechenden zweiten Umsetzungstabelle für einen Ist-Fluiddruck von 3.5 bar angegeben:

| erster Ausgabeanschluss | zweiter Ausgabeanschluss | dritter Ausgabeanschluss |
|---|---|---|
| 0 | 0 | 100 |
| 0 | 100 | 0 |
| 0 | 66 | 33 |
| 100 | 0 | 0 |
| 80 | 0 | 20 |
| 66 | 33 | 0 |
| 57.1 | 28.6 | 14.3 |

Gemäß dieser beispielhaften zweiten Umsetzungstabelle fließt beispielsweise bei einem von der Fluidfördereinrichtung erzeugten Ist-Fluiddruck von 3.5 bar bei sich in Schließstellung befindlichen ersten und zweiten Ausgabeanschluss und geöffnetem dritten Ausgabeanschluss 100% des Gesamtfluidstroms durch den dritten Ausgabeanschluss (erste Zeile der zweiten Umsetzungstabelle entsprechend einer ersten Schaltpermutation).

Gemäß der dritten Zeile (entsprechend einer dritten Schaltpermutation) der obigen zweiten Umsetzungstabelle fließen bei sich in Schließstellung befindlichem ersten Ausgabeanschluss und sich jeweils in Offenstellung befindlichen zweiten und dritten Ausgabeanschlüssen 66% des Gesamtfluidstroms durch den zweiten Ausgabeanschluss und 33% durch den dritten Ausgabeanschluss.

Gemäß der siebten Zeile (entsprechend einer siebten Schaltpermutation) der obigen zweiten Umsetzungstabelle fließen sich jeweils in Offenstellung befindlichen ersten, zweiten und dritten Ausgabeanschlüssen 57.1 % des Gesamtfluidstroms durch den ersten Ausgabeanschluss, 28.6% des Gesamtfluidstroms durch den zweiten Ausgabeanschluss und 14.3% durch den dritten Ausgabeanschluss.

Vorzugsweise ist das Verfahren derart ausgebildet, dass der Verfahrensschritt des Bestimmens des ersten Druckverlustes auch unter Berücksichtigung der von der Fluidfördereinrichtung geförderten Gesamtflussrate erfolgt.

Das entsprechend ausgebildete Verfahren weist den Vorteil auf, dass die erste Flussrate durch die erste Reinigungseinrichtung mit erhöhter Genauigkeit bestimmt wird. Somit ist die Regelgenauigkeit des entsprechend ausgebildeten Verfahrens erheblich verbessert. Ferner wird durch das entsprechend ausgebildete Verfahren erreicht, dass eine effizientere Reinigung der Kraftfahrzeugkomponenten effizienter erreicht wird und der Fluidverbrauch sowie der Energiebedarf reduziert werden.

Das von der Fluidfördereinrichtung geförderte Reinigungsfluid teilt sich auf die Leitungsstränge auf, in denen die diesen Leitungssträngen zugeordneten Ausgabeanschlüsse der Fluidverteilungseinrichtung sich in deren jeweiligen Offenstellungen befinden. Vor der Aufteilung des Reinigungsfluids auf die jeweiligen Leitungsstränge durchläuft das Reinigungsfluid einen zwischen der Fluidfördereinrichtung und der Fluidverteilungseinrichtung befindliche Sammelleitung, die ebenfalls zu dem ersten Druckverlust beiträgt. Folglich durchläuft der Gesamtfluss, der von der Fluidfördereinrichtung gefördert wird, diese Sammelleitung.

Vorzugsweise ist das Verfahren derart ausgebildet, dass bei dem Verfahrensschritt des Ermittelns von zumindest einem Drucksollwert für zumindest eine erste Reinigungseinrichtung zusätzlich zumindest ein weiter Drucksollwert für zumindest eine zweite Reinigungseinrichtung ermittelt wird und ein basierend auf diesen ermittelten Drucksollwerten berechneter Wert als Drucksollwert übernommen wird.

Das entsprechend ausgebildete Verfahren weist den Vorteil auf, dass bei einer Reinigungsanfrage für mehr als eine Kraftfahrzeugkomponente zumindest zwei der Kraftfahrzeugkomponenten mit einem zumindest annähernd den jeweiligen Drucksollwerten entsprechenden Fluiddrücken mit dem Reinigungsfluid beaufschlagt werden, so dass ein Reinigungsergebnis für eine Mehrzahl von Kraftfahrzeugkomponenten verbessert ist.

Beispielsweise wird der auf den ermittelten Drucksollwerten basierende Wert, der als Drucksollwert übernommen wird, dadurch berechnet, indem der Mittelwert der ermittelten Drucksollwerte berechnet wird.

Der vorliegenden Erfindung liegt ferner die Aufgabe zugrunde, ein Reinigungssystem bereitzustellen, welches weniger fehleranfällig und weniger kostenintensiv ist.

Diese der vorliegenden Erfindung zugrundeliegende Aufgabe wird durch ein Reinigungssystem mit den Merkmalen von Anspruch 10 gelöst.

Im Genaueren wird diese der vorliegenden Aufgabe zugrundeliegende Aufgabe durch ein Reinigungssystem gelöst, das eine Fluidfördereinrichtung, einen Drucksensor zum Bestimmen eines von der Fluidfördereinrichtung erzeugten Drucks und eine Fluidverteilungseinrichtung mit zumindest einem mit der Fluidfördereinrichtung fluidverbundenen Eingangsanschluss und mit zumindest zwei mit dem Eingangsanschluss fluidverbundenen Ausgabeanschlüssen, wobei jeder Ausgabeanschluss zwischen einer Offenstellung und einer Schließstellung verstellbar ist, zumindest zwei jeweils über einen Leitungsstrang mit jeweils einem Ausgabeanschluss fluidverbundenen Reinigungseinrichtungen, und eine Steuerungseinrichtung aufweist, die mit der Fluidfördereinrichtung und der Fluidverteilungseinrichtung zum Übertragen und/oder Empfangen von Signalen datengekoppelt ist. Das erfindungsgemäße Reinigungssystem ist dadurch gekennzeichnet, das die Steuerungseinrichtung dazu ausgebildet ist, eines der oben beschriebenen Verfahren auszuführen.

Das erfindungsgemäße Reinigungssystem weist den Vorteil auf, dass dieses eine verminderte Anzahl von Bauteilen aufweist und somit vereinfacht ausgestaltet ist. Im Genaueren weist das erfindungsgemäße Reinigungssystem eine erheblich verminderte Anzahl von Überwachungseinrichtungen zum Überwachen von Reinigungsdrücken und/oder Reinigungsmengen auf, die von den einzelnen Reinigungseinrichtungen des Reinigungssystems bereitgestellt werden müssen, um ein gefordertes Reinigungsergebnis zu gewährleisten. Somit ist das erfindungsgemäße Reinigungssystem weniger fehleranfällig und weniger kostenintensiv.

Die Kraftfahrzeugkomponenten können beispielsweise als Kraftfahrzeugsensoren ausgebildet sein bzw. Kraftfahrzeugsensoren aufweisen, die wiederum beispielsweise optische Sensoren aufweisen können. Beispielsweise können die Kraftfahrzeugsensoren zumindest eine Kamera und/oder zumindest ein Lidar-Sensor aufweisen. Ferner können die Kraftfahrzeugsensoren einen Radar-Sensor aufweisen. Die Kraftfahrzeugkomponenten können auch als beispielsweise Windschutzscheiben, Heckscheiben, Scheinwerfern, Rückleuchten, Warnhinweisbeleuchtungen und/oder weitere Beleuchtungseinrichtungen ausgebildet sein oder diese aufweisen.

Die Fluidfördereinrichtung kann auch als Fluidpumpe oder einfach als Pumpe bezeichnet werden. Die Fluidfördereinrichtung weist zumindest einen Fluideingangsanschluss auf, über den die Fluidfördereinrichtung mit einem Reinigungsfluid versorgt wird. Beispielsweise ist die Fluidfördereinrichtung mittels des Fluideingangsanschlusses mit einem Reinigungsbehälter fluidverbunden, wobei in dem Reinigungsbehälter ein Reinigungsfluid einfüllbar ist. Die Fluidfördereinrichtung weist ferner zumindest einen Fluidausgabeanschluss auf, über den das Reinigungsfluid druckbeaufschlagt ausgegeben werden kann.

Die Fluidfördereinrichtung kann auch zwei oder mehr als zwei Fluidausgabeanschlüsse aufweisen, die vorzugsweise jeweils zwischen einer Offenstellung und einer Schließstellung verstellbar sind.

Die Fluidverteilungseinrichtung dient einer Verteilung des von der Fluidfördereinrichtung bereitgestellten Reinigungsfluids für die Reinigungseinrichtungen des Reinigungssystems. Die Fluidverteilungseinrichtung kann auch als Ventilblock bezeichnet werden.

In der Offenstellung eines Ausgabeanschlusses der Fluidverteilungseinrichtung ist eine Fluidförderung vom Eingangsanschluss der Fluidverteilungseinrichtung durch den betreffenden Ausgabeanschluss ermöglicht, wohingegen in der Schließstellung eines Ausgabeanschlusses eine Fluidförderung von dem Eingangsanschluss durch den betreffenden Ausgabeanschluss unterbunden ist. Vorzugsweise sind die jeweiligen Ausgabeanschlüsse diskret zwischen deren Offenstellung und deren Schließstellung verstellbar, d.h., dass in der Offenstellung eines Ausgabeanschlusses dieser komplett geöffnet ist, wohingegen in der Schließstellung eines Ausgabeanschlusses dieser komplett geschlossen ist.

Die Fluidverteilungseinrichtung weist vorzugsweise mehr als zwei Ausgabeanschlüsse auf. Beispielsweise weist die Fluidverteilungseinrichtung drei, vier, fünf, sechs oder mehr Ausgabeanschlüsse auf. Erfindungsgemäß bestehen hinsichtlich der Anzahl der Ausgabeanschlüsse keine Beschränkungen.

Die Reinigungseinrichtungen sind vorzugsweise als Reinigungsdüsen ausgebildet. Vorzugsweise weist das Reinigungssystem eine der Anzahl der Ausgabeanschlüsse entsprechende Anzahl von Reinigungseinrichtungen auf. Bei einer beispielsweise als Windschutzscheide ausgebildeten Kraftfahrzeugkomponente werden mehrere Reinigungseinrichtungen mit einem Ausgabeanschluss fluidverbunden.

Jede Reinigungseinrichtung kann über jeweils einen Leitungsstrang, der auch als Fluidleitung bezeichnet werden kann, mit einem Ausgabeanschluss der Fluidverteilungseinrichtung fluidverbunden sein. Beispielsweise kann eine erste Reinigungseinrichtung mittels eines ersten Leitungsstrangs mit einem ersten Ausgabeanschluss, eine zweite Reinigungseinrichtung mittels einem zweiten Leitungsstrangs mit einem zweiten Ausgabeanschluss usw. fluidverbunden sein.

Das Reinigungsfluid bzw. das Fluid ist vorzugsweise eine Flüssigkeit, beispielsweise Wasser und/oder eine Reinigungslösung. Folglich kann die Fluidfördereinrichtung auch als Flüssigkeitsfördereinrichtung bzw. als Flüssigkeitspumpe bezeichnet werden.

Die Steuerungseinrichtung ist vorzugsweise auch mit dem Drucksensor zum Übertragen und/oder Empfangen von Signalen datengekoppelt.

Vorzugsweise ist die Fluidfördereinrichtung mit dem Drucksensor zum Übertragen und/oder Empfangen von Signalen datengekoppelt.

Vorzugsweise ist die Steuerungseinrichtung als Teil der Fluidfördereinrichtung ausgebildet und/oder in dieser integriert.

Der vorliegenden Erfindung liegt ferner die Aufgabe zugrunde, ein Kraftfahrzeug bereitzustellen, das eine verbesserte Reinigung von Kraftfahrzeugkomponenten bei gleichzeitiger Reduktion von Bauteilen ermöglicht.

Diese der vorliegenden Erfindung zugrundeliegende Aufgabe wird durch ein Kraftfahrzeug mit den Merkmalen von Anspruch 11 gelöst.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine schematische Darstellung des erfindungsgemäßen Reinigungssystems;
- Figur 2:: ein Flussablaufdiagramm eines erfindungsgemäßen Verfahrens zum Steuern eines in Figur 1 dargestellten Reinigungssystems;
- Figur 3:: ein Kennfeld der Fluidfördereinrichtung, das für unterschiedliche Leistungsstufen einer Fluidfördereinrichtung die von der Fluidfördereinrichtung erzielbare Gesamtflussrate in Abhängigkeit des Fluiddrucks angibt; und
- Figur 4:: eine schematische Darstellung eines Reinigungssystems gemäß einer weiteren Ausführungsform der vorliegenden Erfindung.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

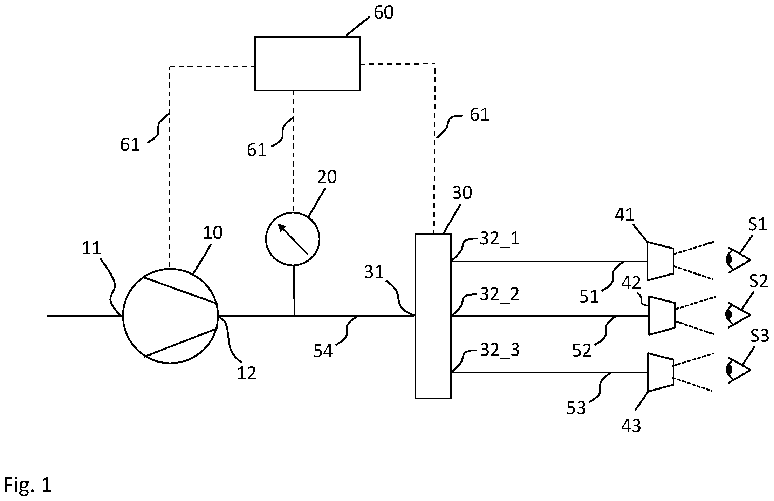

Figur 1 zeigt eine schematische Darstellung eines erfindungsgemäßen Reinigungssystems für Kraftfahrzeugkomponenten S1, S2, S3, die in den folgend beschriebenen Ausführungsbeispielen als Kraftfahrzeugsensoren S1, S2, S3 ausgebildet sind. Jedoch ist die vorliegende Erfindung nicht darauf beschränkt, dass die Kraftfahrzeugkomponenten als Kraftfahrzeugsensoren ausgebildet sind oder diese aufweisen. Die Kraftfahrzeugkomponenten können auch als Windschutzscheiben, Heckscheiben, Scheinwerfer, Rückleuchten, Warnhinweisbeleuchtungen und/oder allgemein als Beleuchtungseinrichtungen ausgebildet sein oder diese aufweisen.

Die Kraftfahrzeugsensoren S1, S2, S3 können beispielsweise optische Sensoren aufweisen. Beispielsweise können die Kraftfahrzeugsensoren S1, S2, S3 zumindest eine Kamera und/oder zumindest ein Lidar-Sensor aufweisen. Ferner können die Kraftfahrzeugsensoren S1, S2, S3 einen Radar-Sensor aufweisen. In dem dargestellten Ausführungsbeispiel weist das Reinigungssystem 3 Kraftfahrzeugsensoren S1, S2, S3 auf, jedoch ist die vorliegende Erfindung nicht auf diese Anzahl von Kraftfahrzeugsensoren beschränkt, Das erfindungsgemäße Reinigungssystem kann zwei oder mehr (beispielsweise vier, fünf, sechs, oder mehr) Kraftfahrzeugsensoren aufweisen.

Das Reinigungssystem weist eine Fluidfördereinrichtung 10 auf, die auch als auch als Fluidpumpe 10 oder einfach als Pumpe 10 bezeichnet werden. Die Fluidfördereinrichtung 10 weist zumindest einen Fluideingangsanschluss 11 auf, über den die Fluidfördereinrichtung 10 mit einem Reinigungsfluid versorgt wird. Beispielsweise ist die Fluidfördereinrichtung 10 mittels des Fluideingangsanschlusses 11 mit einem in den Figuren nicht dargestellten Reinigungsbehälter fluidverbunden, wobei in dem Reinigungsbehälter ein Reinigungsfluid einfüllbar ist. Die Fluidfördereinrichtung 10 weist ferner zumindest einen Fluidausgabeanschluss 12 auf, über den das Reinigungsfluid druckbeaufschlagt ausgegeben werden kann.

Das Reinigungssystem weist ferner eine Fluidverteilungseinrichtung 30 mit zumindest einem mit der Fluidfördereinrichtung 10 fluidverbundenen Eingangsanschluss 31 auf, wobei der Eingangsanschluss 31 der der Fluidverteilungseinrichtung 30 mit dem Fluidausgabeanschluss 12 der Fluidfördereinrichtung 12 mittels einer Sammelfluidleitung 54 fluidverbunden ist. Die Fluidverteilungseinrichtung 30 weist ferner zumindest zwei mit dem Eingangsanschluss 31 fluidverbundenen Ausgabeanschlüssen 32_1, 32_2, 32_3 auf. In dem dargestellten Ausführungsbeispiel weist die Fluidverteilungseinrichtung 30, die auch als Ventilblock 30 bezeichnet werden kann, drei Ausgabeanschlüsse 32_1, 32_2, 32_3 auf. Jedoch kann die Fluidverteilungseinrichtung 30 auch mehr als drei Ausgabeanschlüsse aufweisen. Jeder der Ausgabeanschlüsse 32_1, 32_2, 32_3 ist zwischen einer Offenstellung und einer Schließstellung verstellbar. In der Offenstellung eines Ausgabeanschlusses 32_1, 32_2, 32_3 ist eine Fluidförderung vom Eingangsanschluss 31 der Fluidverteilungseinrichtung 30 durch den betreffenden Ausgabeanschluss 32_1, 32_2, 32_3 ermöglicht, wohingegen in der Schließstellung eines Ausgabeanschlusses 32_1, 32_2, 32_3 eine Fluidförderung von dem Eingangsanschluss 31 durch den betreffenden Ausgabeanschluss 32_1, 32_2, 32_3 unterbunden ist.

Das Reinigungssystem weist ferner einen Drucksensor 20 zum Bestimmen eines von der Fluidfördereinrichtung 10 erzeugten Drucks auf.

Weiterhin weist das Reinigungssystem zumindest zwei jeweils über eine Fluidleitung 51, 52, 53 mit jeweils einem Ausgabeanschluss 32_1, 32_2, 32_3 fluidverbundenen Reinigungseinrichtungen 41, 42, 43 auf. In dem dargestellten Ausführungsbeispiel weist das Reinigungssystem drei Reinigungseinrichtungen 41, 42, 43 auf, jedoch kann das Reinigungssystem auch mehr als drei (beispielsweise vier, fünf, sechs oder mehr) Reinigungseinrichtungen 41, 42, 43 aufweisen. Die Reinigungseinrichtungen 41, 42, 43 sind in dem dargestellten Ausführungsbeispiel als Reinigungsdüsen 41, 42, 42 ausgebildet. Die Reinigungseinrichtungen 41, 42, 43 sind dazu ausgebildet, das von der Fluidfördereinrichtung 10 geförderte Reinigungsfluid auf die Kraftfahrzeugsensoren S1, S2, S3 auszugeben bzw. zu sprühen. Dabei ist in dem dargestellten Ausführungsbeispiel jeweils eine Reinigungseinrichtung 41, 42, 43 einem Kraftfahrzeugsensor S1, S2, S3 zugeordnet.

Ferner weist das Reinigungssystem eine Steuerungseinrichtung 60 auf, die jeweils über eine Datenleitung 61 bzw. Signalleitung 61 mit der Fluidfördereinrichtung 10, dem Drucksensor 20 und der Fluidverteilungseinrichtung 30 zum Übertragen und/oder Empfangen von Signalen datengekoppelt ist. Die Steuerungseinrichtung 60 ist dazu ausgebildet, von dem Drucksensor 20 ermittelte Daten zu empfangen. Ferner ist die Steuerungseinrichtung dazu ausgebildet, von der Fluidfördereinrichtung 10 übermittelte Daten, die die Leistungsstufe der Fluidfördereinrichtung 10 repräsentieren, zu empfangen. Ferner ist die Steuerungseinrichtung 60 dazu ausgebildet, Steuerungssignale an die Fluidfördereinrichtung 10 zum Einstellen der Leistungsstufe der Fluidfördereinrichtung 10 zu übertragen. Weiterhin ist die Steuerungseinrichtung dazu ausgebildet, von der Fluidverteilungseinrichtung 30 übermittelte Daten, die die Schaltstellungen der Ausgabeanschlüsse 32_1, 32_2, 32_3 repräsentieren, zu empfangen. Ferner ist die Steuerungseinrichtung 60 dazu ausgebildet, Steuerungssignale an die Fluidverteilungseinrichtung 30 zum Verstellen der Schaltstellungen der Ausgabeanschlüsse 32_1, 32_2, 32_3 zu übertragen.

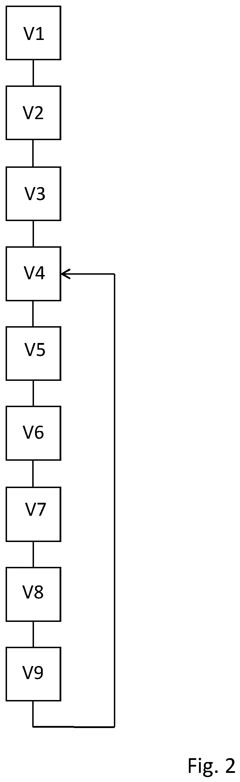

Die Steuerungseinrichtung 60 ist dazu ausgebildet, die in Figur 2 dargestellten und nachfolgend beschrieben Verfahrensschritte auszuführen.

In einem Verfahrensschritt V1 wird eine Reinigungsanforderung für alle Reinigungseinrichtungen 41, 42, 43 ermittelt. Die Reinigungsanforderung enthält Informationen darüber, welcher Kraftfahrzeugsensor S1, S2, S3 gereinigt werden soll. Folglich enthält die Reinigungsanforderung Informationen, welche Reinigungseinrichtung 41, 42, 42 aktiviert werden soll. Ferner enthält die Reinigungsanforderung Informationen darüber, wie hoch der Fluiddruck an den Ausgängen der Reinigungseinrichtungen 41, 42, 43 sein soll. Weiterhin kann die Reinigungsanforderung Informationen enthalten, für welche Dauer die Reinigungseinrichtungen Reinigungsfluid ausgeben sollen.

In einem Verfahrensschritt V2 wird zumindest ein Drucksollwert für zumindest eine erste Reinigungseinrichtung 41, 42, 43 ermittelt. Es ist auch möglich, dass bei dem Verfahrensschritt V2 zusätzlich zumindest ein weiter Drucksollwert für zumindest eine zweite Reinigungseinrichtung 41, 42, 43 ermittelt wird und ein Mittelwert der ermittelten Drucksollwerte als Drucksollwert (Ziel-Drucksollwert) übernommen wird.

In einem Verfahrensschritt V3 werden die Ausgabeanschlüsse 32_1, 32_2, 32_3 der Fluidverteilungseinrichtung 30 in deren Offenstellung oder in deren Schließstellung entsprechend der Reinigungsanforderung eingestellt.

In einem Verfahrensschritt V4 wird ein Ist-Fluiddruck, der von der Fluidfördereinrichtung 10 erzeugt wird, mittels des Drucksensors 20 ermittelt. Dabei wird der von der Fluidfördereinrichtung 10 erzeugte Fluiddruck zum Zeitpunkt der Ermittlung ermittelt. Bei fortschreitenden Iterationsschritten des Verfahrens gleicht sich der Ist-Fluiddruck einer Regelsollgröße an, wobei sich die Regelsollgröße durch Addition des Drucksollwerts und dem ersten Druckverlust ergibt.

In einem Verfahrensschritt V5 wird eine Gesamtflussrate, die von der Fluidfördereinrichtung 10 gefördert wird, basierend auf dem Ist-Fluiddruck ermittelt. Die von der Fluidfördereinrichtung 10 geförderte Gesamtflussrate ist proportional zu dem Ist-Fluiddruck, so dass basierend auf dem Ist-Fluiddruck die Gesamtflussrate bestimmt werden kann.

Bei dem Verfahrensschritt V5 zum Bestimmen einer Gesamtflussrate, die von der Fluidfördereinrichtung 10 gefördert wird, kann diese unter Verwendung einer Leistungsstufeninformation der Fluidfördereinrichtung 10 erfolgt. Bei einer beispielsweise als bürstenlose Gleichstrompumpe 10 ausgebildeten Fluidfördereinrichtung 10 ist eine Drehzahl der Pumpe 10 eine Leistungsstufe der Pumpe 10.

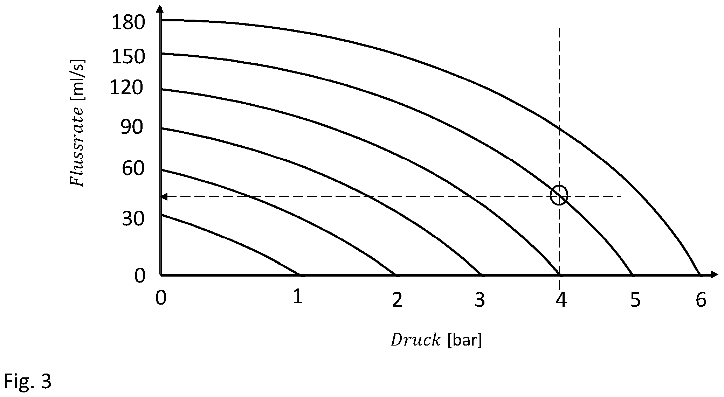

Bei dem Verfahrensschritt V5 zum Bestimmen einer Gesamtflussrate, die von der Fluidfördereinrichtung 10 gefördert wird, kann diese unter Verwendung eines in Figur 3 dargestellten Kennfeldes der Fluidfördereinrichtung 10 erfolgen, welches für unterschiedliche Leistungsstufen der Fluidfördereinrichtung 10 die von der Fluidfördereinrichtung 10 erzielbare Gesamtflussrate in Abhängigkeit des Fluiddrucks angibt.

Aus Figur 3 ist ersichtlich, dass mit steigender Leistungsstufe größere Fluiddrücke bei gleichzeitiger größerer Flussrate von der Fluidfördereinrichtung 10 realisierbar sind.

In einem Verfahrensschritt V6 wird eine erste Flussrate durch die erste Reinigungseinrichtung 41, 42, 43 basierend auf der Gesamtflussrate bestimmt. Die Bestimmung der ersten Flussrate durch die erste Reinigungseinrichtung 41, 42, 42 ist abhängig von der von der Fluidfördereinrichtung 10 bereitgestellte Gesamtflussrate, die sich auf die Reinigungseinrichtungen 41, 42, 43 aufteilt, die einem sich in Offenstellung befindlichen Ausgabeanschluss 32_1, 32_2, 32_3 der Fluidverteilungseinrichtung 30 zugeordnet sind. Daher ist es möglich, die erste Flussrate durch die erste Reinigungseinrichtung 41, 42, 43 basierend auf der Gesamtflussrate zu bestimmen.

Wenn im Verfahrensschritt V2 ein zusätzlicher Drucksollwert durch zumindest eine zweite Reinigungseinrichtung 41, 42, 42 ermittelt wird und ein Mittelwert der ermittelten Drucksollwerte als Drucksollwert (Ziel-Drucksollwert) übernommen wird, dann können beim Verfahrensschritt V6 der Bestimmung der ersten Flussrate durch die erste Reinigungseinrichtung 41, 42, 43 zusätzlich noch zumindest eine weitere Flussrate durch zumindest eine weitere Reinigungseinrichtung 41, 42, 43 basierend auf der Gesamtflussrate bestimmt werden.

Bei dem Verfahrensschritt V6 des Bestimmens der ersten Flussrate durch die erste Reinigungseinrichtung 41, 42, 43 und gegebenenfalls von weiteren Flussraten durch die weiteren Reinigungseinrichtungen 41, 42, 43 erfolgt deren Bestimmung auch basierend auf Schaltstellungen der Ausgabeanschlüsse 32_1, 32_2, 32_3 der Fluidverteilungseinrichtung 30.

Denn das von der Fluidfördereinrichtung 10 geförderte Reinigungsfluid teilt sich auf die Leitungsstränge auf, in denen die diesen Leitungssträngen zugeordneten Ausgabeanschlüsse 32_1, 32_2, 32_3 der Fluidverteilungseinrichtung 30 sich in deren jeweiligen Offenstellungen befinden. Dabei teilt sich die Gesamtflussrate entsprechend der Strömungswiderstände der sich flussabwärts der Ausgabeanschlüsse 32_1, 32_2, 32_3 befindlichen Leitungsstränge auf.

In einem Verfahrensschritt V7 wird ein erster Druckverlust in einem Leitungsstrang 54, 30, 51, 52, 53, 41, 42, 43, über den die erste Reinigungseinrichtung 41, 42, 43 mit der Fluidfördereinrichtung 10 fluidverbunden ist, unter Berücksichtigung der ersten Flussrate bestimmt.

Wenn im Verfahrensschritt V2 ein zusätzlicher Drucksollwert durch zumindest eine zweite Reinigungseinrichtung 41, 42, 42 ermittelt wird und ein Mittelwert der ermittelten Drucksollwerte als Drucksollwert (Ziel-Drucksollwert) übernommen wird, dann können beim Verfahrensschritt V7 zusätzlich zumindest ein zweiter Druckverlust in einem Leitungsstrang 54, 30, 51, 52, 53, 41, 42, 43, über den die weitere Reinigungseinrichtung 41, 42, 43 mit der Fluidfördereinrichtung 10 fluidverbunden ist, unter Berücksichtigung der ersten Flussrate bestimmt werden.

Die Bestimmung eines Druckverlustes ist abhängig von der Flussrate durch die entsprechende Reinigungseinrichtung 41, 42, 43. Der Leitungsstrang, über den die entsprechende Reinigungseinrichtung 41, 42, 43 mit der Fluidfördereinrichtung 10, im Genaueren mit dem Fluidausgabeanschluss 12 der Fluidfördereinrichtung 10 fluidverbunden ist, weist beispielsweise eine Sammelfluidleitung 54 von dem Fluidausgabeanschluss 12 zu der Fluidverteilungseinrichtung 30, die Fluidverteilungseinrichtung 30, eine Fluidleitung, über die ein Ausgabeanschluss 32_1, 32_2, 32_3 der Fluidverteilungseinrichtung 30 mit der entsprechenden Reinigungseinrichtung 41, 42, 43 fluidverbunden ist, und die entsprechende Fluidverteilungseinrichtung auf 41, 42, 43.

Der Verfahrensschritt V7 der Bestimmung des ersten Druckverlustes bzw. der mehreren Druckverluste erfolgt auch unter Berücksichtigung der von der Fluidfördereinrichtung 10 geförderten Gesamtflussrate.

Denn das von der Fluidfördereinrichtung 10 geförderte Reinigungsfluid teilt sich auf die Leitungsstränge auf, in denen die diesen Leitungssträngen zugeordneten Ausgabeanschlüsse 32_1, 32_2, 32_3 der Fluidverteilungseinrichtung 30 sich in deren jeweiligen Offenstellungen befinden. Vor der Aufteilung des Reinigungsfluids auf die jeweiligen Leitungsstränge durchläuft das Reinigungsfluid die zwischen der Fluidfördereinrichtung 10 und der Fluidverteilungseinrichtung 30 befindliche Sammelleitung 54, die ebenfalls zu dem ersten Druckverlust beiträgt. Folglich durchläuft der Gesamtfluss, der von der Fluidfördereinrichtung 10 gefördert wird, diese Sammelleitung 54.

In einem Verfahrensschritt V8 wird ein Druckregelwert basierend auf dem Drucksollwert (Ziel-Drucksollwert) und dem ersten Druckverlust bestimmt. Im Verfahrensschritt V8 zur Bestimmung bzw. Berechnung des Druckregelwertes wird der Druckwert ermittelt, den die Fluidfördereinrichtung 10 erzeugen soll, damit Reinigungsfluid mit dem Drucksollwert aus der ersten Reinigungseinrichtung 41, 42, 43 ausgegeben werden kann. Der Druckregelwert wird beispielsweise durch Addition des Drucksollwertes und des ersten Druckverlustes berechnet.

In einem Verfahrensschritt V9 wird die Fluidfördereinrichtung 10 derart eingestellt, dass ein von der Fluidfördereinrichtung 10 bereitgestellter Fluiddruck in Richtung des Druckregelwertes verändert wird.

Die Verfahrensschritte V1 bis V3 werden pro Reinigungsanforderung lediglich einmal ausgeführt, wohingegen die Verfahrensschritte V4 bis V9 sooft ausgeführt werden, bis sich der Ist-Fluiddruck auf einen vorbestimmten Abstand zum Druckregelwert angenähert hat.

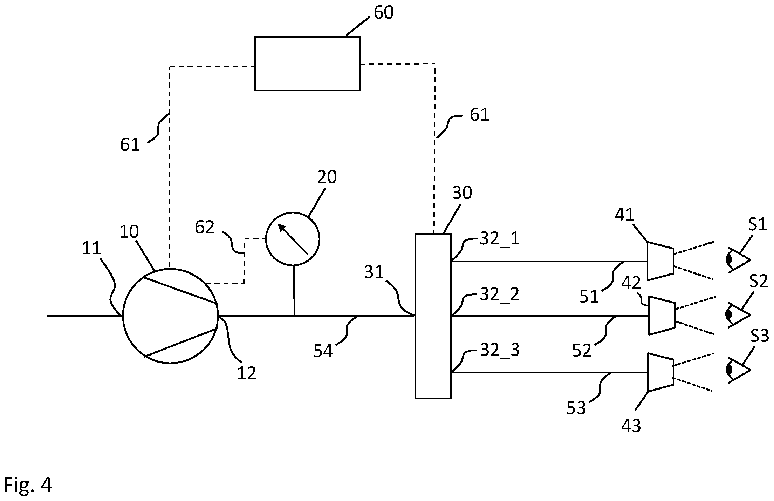

Figur 4 zeigt eine schematische Darstellung eines Reinigungssystems gemäß einer weiteren Ausführungsform der vorliegenden Erfindung. Das in Figur 4 dargestellte Reinigungssystem entspricht dabei im Wesentlichen dem in Figur 1 dargestellten Reinigungssystem mit der Ausnahme, dass die Steuerungseinrichtung 60 lediglich mit der Fluidfördereinrichtung 10 und mit der Fluidverteilungseinrichtung 30 über Datenleitungen 61 zum Übertragen und/oder Empfangen von Signalen nicht jedoch mit dem Drucksensor 20 datengekoppelt ist. Hingegen ist bei dem in Figur 4 dargestellten Reinigungssystem die Fluidfördereinrichtung 10 mittels einer Datenleitung bzw. Signalleitung 62 mit dem Drucksensor 20 zum Übertragen und/oder Empfangen von Signalen datengekoppelt. Die Fluidfördereinrichtung 10 ist dazu ausgebildet, von dem Drucksensor 20 ermittelte Daten zu empfangen.

Der übrige Aufbau des in Figur 4 dargestellten Reinigungssystems entspricht dem des in Figur 1 dargestellten Reinigungssystems, so dass zwecks Vermeidung von Wiederholungen auf die obige Beschreibung verwiesen wird.

Die Steuerungseinrichtung 60 und/oder die Fluidfördereinrichtung 10 sind dazu ausgebildet, die in Figur 2 dargestellten und nachfolgend beschriebenen Verfahrensschritte V1 bis V9 auszuführen.

Im Verfahrensschritt V1 wird eine Reinigungsanforderung für alle Reinigungseinrichtungen 41, 42, 43 ermittelt. Die Reinigungsanforderung enthält Informationen darüber, welcher Kraftfahrzeugsensor S1, S2, S3 gereinigt werden soll. Folglich enthält die Reinigungsanforderung Informationen, welche Reinigungseinrichtung 41, 42, 42 aktiviert werden soll. Ferner enthält die Reinigungsanforderung Informationen darüber, wie hoch der Fluiddruck an den Ausgängen der Reinigungseinrichtungen 41, 42, 43 sein soll. Weiterhin kann die Reinigungsanforderung Informationen enthalten, für welche Dauer die Reinigungseinrichtungen Reinigungsfluid ausgeben sollen. Dieser Verfahrensschritt wird von der Steuerungseinrichtung 60 ausgeführt.

Im Verfahrensschritt V2 wird zumindest ein Drucksollwert für zumindest eine erste Reinigungseinrichtung 41, 42, 43 ermittelt. Es ist auch möglich, dass bei dem Verfahrensschritt V2 zusätzlich zumindest ein weiter Drucksollwert für zumindest eine zweite Reinigungseinrichtung 41, 42, 43 ermittelt wird und ein Mittelwert der ermittelten Drucksollwerte als Drucksollwert (Ziel-Drucksollwert) übernommen wird. Dieser Verfahrensschritt wird entweder von der Steuerungseinrichtung 60 oder von der Fluidfördereinrichtung 10 ausgeführt.

Im Verfahrensschritt V3 werden die Ausgabeanschlüsse 32_1, 32_2, 32_3 der Fluidverteilungseinrichtung 30 in deren Offenstellung oder in deren Schließstellung entsprechend der Reinigungsanforderung eingestellt. Dieser Verfahrensschritt wird von der Steuerungseinrichtung 60 ausgeführt.

Im Verfahrensschritt V4 wird ein Ist-Fluiddruck, der von der Fluidfördereinrichtung 10 erzeugt wird, mittels des Drucksensors 20 ermittelt. Dabei wird der von der Fluidfördereinrichtung 10 erzeugte Fluiddruck zum Zeitpunkt der Ermittlung ermittelt. Bei fortschreitenden Iterationsschritten des Verfahrens gleicht sich der Ist-Fluiddruck einer Regelsollgröße an, wobei sich die Regelsollgröße durch Addition des Drucksollwerts und dem ersten Druckverlust ergibt. Dieser Verfahrensschritt wird von der Fluidfördereinrichtung 10 ausgeführt.

Im Verfahrensschritt V5 wird eine Gesamtflussrate, die von der Fluidfördereinrichtung 10 gefördert wird, basierend auf dem Ist-Fluiddruck ermittelt. Die von der Fluidfördereinrichtung 10 geförderte Gesamtflussrate ist proportional zu dem Ist-Fluiddruck, so dass basierend auf dem Ist-Fluiddruck die Gesamtflussrate bestimmt werden kann. Dieser Verfahrensschritt wird entweder von der Steuerungseinrichtung 60 oder von der Fluidfördereinrichtung 10 ausgeführt.

Bei dem Verfahrensschritt V5 zum Bestimmen einer Gesamtflussrate, die von der Fluidfördereinrichtung 10 gefördert wird, kann diese unter Verwendung einer Leistungsstufeninformation der Fluidfördereinrichtung 10 erfolgt. Bei einer beispielsweise als bürstenlose Gleichstrompumpe 10 ausgebildeten Fluidfördereinrichtung 10 ist eine Drehzahl der Pumpe 10 eine Leistungsstufe der Pumpe 10.

Bei dem Verfahrensschritt V5 zum Bestimmen einer Gesamtflussrate, die von der Fluidfördereinrichtung 10 gefördert wird, kann diese unter Verwendung des in Figur 3 dargestellten Kennfeldes der Fluidfördereinrichtung 10 erfolgen, welches oben bereits beschrieben ist.

Im Verfahrensschritt V6 wird eine erste Flussrate durch die erste Reinigungseinrichtung 41, 42, 43 basierend auf der Gesamtflussrate bestimmt. Die Bestimmung der ersten Flussrate durch die erste Reinigungseinrichtung 41, 42, 42 ist abhängig von der von der Fluidfördereinrichtung 10 bereitgestellte Gesamtflussrate, die sich auf die Reinigungseinrichtungen 41, 42, 43 aufteilt, die einem sich in Offenstellung befindlichen Ausgabeanschluss 32_1, 32_2, 32_3 der Fluidverteilungseinrichtung 30 zugeordnet sind. Daher ist es möglich, die erste Flussrate durch die erste Reinigungseinrichtung 41, 42, 43 basierend auf der Gesamtflussrate zu bestimmen. Dieser Verfahrensschritt wird entweder von der Steuerungseinrichtung 60 oder von der Fluidfördereinrichtung 10 ausgeführt.

Wenn im Verfahrensschritt V2 ein zusätzlicher Drucksollwert durch zumindest eine zweite Reinigungseinrichtung 41, 42, 42 ermittelt wird und ein Mittelwert der ermittelten Drucksollwerte als Drucksollwert (Ziel-Drucksollwert) übernommen wird, dann können beim Verfahrensschritt V6 der Bestimmung der ersten Flussrate durch die erste Reinigungseinrichtung 41, 42, 43 zusätzlich noch zumindest eine weitere Flussrate durch zumindest eine weitere Reinigungseinrichtung 41, 42, 43 basierend auf der Gesamtflussrate bestimmt werden.

Bei dem Verfahrensschritt V6 des Bestimmens der ersten Flussrate durch die erste Reinigungseinrichtung 41, 42, 43 und gegebenenfalls von weiteren Flussraten durch die weiteren Reinigungseinrichtungen 41, 42, 43 erfolgt deren Bestimmung auch basierend auf Schaltstellungen der Ausgabeanschlüsse 32_1, 32_2, 32_3 der Fluidverteilungseinrichtung 30.

Denn das von der Fluidfördereinrichtung 10 geförderte Reinigungsfluid teilt sich auf die Leitungsstränge auf, in denen die diesen Leitungssträngen zugeordneten Ausgabeanschlüsse 32_1, 32_2, 32_3 der Fluidverteilungseinrichtung 30 sich in deren jeweiligen Offenstellungen befinden. Dabei teilt sich die Gesamtflussrate entsprechend der Strömungswiderstände der sich flussabwärts der Ausgabeanschlüsse 32_1, 32_2, 32_3 befindlichen Leitungsstränge auf.

Im Verfahrensschritt V7 wird ein erster Druckverlust in einem Leitungsstrang 54, 30, 51, 52, 53, 41, 42, 43, über den die erste Reinigungseinrichtung 41, 42, 43 mit der Fluidfördereinrichtung 10 fluidverbunden ist, unter Berücksichtigung der ersten Flussrate bestimmt. Dieser Verfahrensschritt wird entweder von der Steuerungseinrichtung 60 oder von der Fluidfördereinrichtung 10 ausgeführt.

Wenn im Verfahrensschritt V2 ein zusätzlicher Drucksollwert durch zumindest eine zweite Reinigungseinrichtung 41, 42, 42 ermittelt wird und ein Mittelwert der ermittelten Drucksollwerte als Drucksollwert (Ziel-Drucksollwert) übernommen wird, dann können beim Verfahrensschritt V7 zusätzlich zumindest ein zweiter Druckverlust in einem Leitungsstrang 54, 30, 51, 52, 53, 41, 42, 43, über den die weitere Reinigungseinrichtung 41, 42, 43 mit der Fluidfördereinrichtung 10 fluidverbunden ist, unter Berücksichtigung der ersten Flussrate bestimmt werden.

Der Verfahrensschritt V7 der Bestimmung des ersten Druckverlustes bzw. der mehreren Druckverluste erfolgt auch unter Berücksichtigung der von der Fluidfördereinrichtung 10 geförderten Gesamtflussrate.

Denn das von der Fluidfördereinrichtung 10 geförderte Reinigungsfluid teilt sich auf die Leitungsstränge auf, in denen die diesen Leitungssträngen zugeordneten Ausgabeanschlüsse 32_1, 32_2, 32_3 der Fluidverteilungseinrichtung 30 sich in deren jeweiligen Offenstellungen befinden. Vor der Aufteilung des Reinigungsfluids auf die jeweiligen Leitungsstränge durchläuft das Reinigungsfluid die zwischen der Fluidfördereinrichtung 10 und der Fluidverteilungseinrichtung 30 befindliche Sammelleitung 54, die ebenfalls zu dem ersten Druckverlust beiträgt. Folglich durchläuft der Gesamtfluss, der von der Fluidfördereinrichtung 10 gefördert wird, diese Sammelleitung 54.

Im Verfahrensschritt V8 wird ein Druckregelwert basierend auf dem Drucksollwert (Ziel-Drucksollwert) und dem ersten Druckverlust bestimmt. Im Verfahrensschritt V8 zur Bestimmung bzw. Berechnung des Druckregelwertes wird der Druckwert ermittelt, den die Fluidfördereinrichtung 10 erzeugen soll, damit Reinigungsfluid mit dem Drucksollwert aus der ersten Reinigungseinrichtung 41, 42, 43 ausgegeben werden kann. Der Druckregelwert wird beispielsweise durch Addition des Drucksollwertes und des ersten Druckverlustes berechnet. Dieser Verfahrensschritt wird entweder von der Steuerungseinrichtung 60 oder von der Fluidfördereinrichtung 10 ausgeführt.

Im Verfahrensschritt V9 wird die Fluidfördereinrichtung 10 derart eingestellt, dass ein von der Fluidfördereinrichtung 10 bereitgestellter Fluiddruck in Richtung des Druckregelwertes verändert wird. Dieser Verfahrensschritt wird entweder von der Steuerungseinrichtung 60 oder von der Fluidfördereinrichtung 10 ausgeführt.

Die Verfahrensschritte V1 bis V3 werden pro Reinigungsanforderung lediglich einmal ausgeführt, wohingegen die Verfahrensschritte V4 bis V9 sooft ausgeführt werden, bis sich der Ist-Fluiddruck auf einen vorbestimmten Abstand zum Druckregelwert angenähert hat.

### Bezugszeichenliste

- 1: Reinigungssystem
- 10: Fluidfördereinrichtung / Pumpe
- 11: Fluideingangsanschluss (der Fluidfördereinrichtung)
- 12: Fluidausgabeanschluss (der Fluidfördereinrichtung)
- 20: Drucksensor
- 30: Fluidverteilungseinrichtung / Ventilblock
- 31: Eingangsanschluss (der Fluidverteilungseinrichtung)
- 32_1: (erster) Ausgabeanschluss (der Fluidverteilungseinrichtung)
- 32_2: (zweiter) Ausgabeanschluss (der Fluidverteilungseinrichtung)
- 32_3: (dritter) Ausgabeanschluss (der Fluidverteilungseinrichtung)
- 41: (erste) Reinigungseinrichtung / Reinigungsdüse
- 42: (zweite) Reinigungseinrichtung / Reinigungsdüse
- 43: (dritte) Reinigungseinrichtung / Reinigungsdüse
- 51: (erste) Fluidleitung
- 52: (zweite) Fluidleitung
- 53: (dritte) Fluidleitung
- 54: Sammelfluidleitung
- 60: Steuerungseinrichtung
- 61: Datenleitung / Signalleitung
- 62: Datenleitung / Signalleitung

- S1: (erste) Kraftfahrzeugkomponente / (erster) Sensor / Kraftfahrzeugsensor / optischer Sensor
- S2: (zweite) Kraftfahrzeugkomponente / (zweiter) Sensor / Kraftfahrzeugsensor / optischer Sensor
- S3: (dritte) Kraftfahrzeugkomponente / (dritter) Sensor / Kraftfahrzeugsensor / optischer Sensor

- V1: Verfahrensschritt
- V2: Verfahrensschritt
- V3: Verfahrensschritt
- V4: Verfahrensschritt
- V5: Verfahrensschritt
- V6: Verfahrensschritt
- V7: Verfahrensschritt
- V8: Verfahrensschritt
- V9: Verfahrensschritt

## Patentansprüche

1. Verfahren zum Steuern eines Reinigungssystems für Kraftfahrzeugkomponenten (S1, S2, S3), wobei das Reinigungssystem folgendes aufweist:
- eine Fluidfördereinrichtung (10);
- einen Drucksensor (20) zum Bestimmen eines von der Fluidfördereinrichtung (10) erzeugten Drucks;
- eine Fluidverteilungseinrichtung (30) mit zumindest einem mit der Fluidfördereinrichtung (10) fluidverbundenen Eingangsanschluss (31) und mit zumindest zwei mit dem Eingangsanschluss (31) fluidverbundenen Ausgabeanschlüssen (32_1, 32_2, 32_3), wobei jeder Ausgabeanschluss (32_1, 32_2, 32_3) zwischen einer Offenstellung und einer Schließstellung verstellbar ist;
- zumindest zwei jeweils über eine Fluidleitung (51, 52, 53) mit jeweils einem Ausgabeanschluss (32_1, 32_2, 32_3) fluidverbundenen Reinigungseinrichtungen (41, 42, 43); und
- eine Steuerungseinrichtung (60), die mit der Fluidfördereinrichtung (10) und der Fluidverteilungseinrichtung (30) zum Übertragen und/oder Empfangen von Signalen datengekoppelt ist,
wobei das Verfahren folgende Verfahrensschritte aufweist:
- Ermitteln (V1) einer Reinigungsanforderung für alle Reinigungseinrichtungen (41, 42, 43);
- Ermitteln (V2) eines Drucksollwertes für zumindest eine erste Reinigungseinrichtung (41, 42, 43);
- Einstellen (V3) der Ausgabeanschlüsse (32_1, 32_2, 32_3) der Fluidverteilungseinrichtung (30) in deren Offenstellung oder in deren Schließstellung entsprechend der Reinigungsanforderung;
- Ermitteln (V4) eines Ist-Fluiddrucks, der von der Fluidfördereinrichtung (10) erzeugt wird;
wobei das Verfahren durch die folgenden Verfahrensschritte gekennzeichnet ist:
- Bestimmen (V5) einer Gesamtflussrate, die von der Fluidfördereinrichtung (10) gefördert wird, basierend auf dem Ist-Fluiddruck;
- Bestimmen (V6) einer ersten Flussrate durch die erste Reinigungseinrichtung (41, 42, 43) basierend auf der Gesamtflussrate;
- Bestimmen (V7) eines ersten Druckverlustes in einem Leitungsstrang (54, 30, 51, 52, 53, 41, 42, 43), über den die erste Reinigungseinrichtung (41, 42, 43) mit der Fluidfördereinrichtung (10) fluidverbunden ist, unter Berücksichtigung der ersten Flussrate;
- Bestimmen (V8) eines Druckregelwertes basierend auf dem Drucksollwert und dem ersten Druckverlust; und
- Einstellen (V9) der Fluidfördereinrichtung (10) derart, dass ein von der Fluidfördereinrichtung (10) bereitgestellter Fluiddruck in Richtung des Druckregelwertes verändert wird.

2. Verfahren nach Anspruch 1, **dadurch gekennzeichnet, dass** der Verfahrensschritt (V5) des Bestimmens einer Gesamtflussrate, die von der Fluidfördereinrichtung (10) gefördert wird, unter Verwendung einer Leistungsstufeninformation der Fluidfördereinrichtung (10) erfolgt.

3. Verfahren nach einem der vorhergehenden Ansprüchen, **dadurch gekennzeichnet, dass** der Verfahrensschritt (V5) des Bestimmens einer Gesamtflussrate, die von der Fluidfördereinrichtung (10) gefördert wird, unter Verwendung eines Kennfeldes der Fluidfördereinrichtung (10) erfolgt, das für unterschiedliche Leistungsstufen der Fluidfördereinrichtung (10) die von der Fluidfördereinrichtung (10) erzielbare Gesamtflussrate in Abhängigkeit des Fluiddrucks angibt.

4. Verfahren nach einem der vorhergehenden Ansprüchen, **dadurch gekennzeichnet, dass** die Fluidfördereinrichtung (10) auf die niedrigste Leistungsstufe eingestellt wird, mit der der Druckregelwert von der Fluidfördereinrichtung (10) erzielbar ist.

5. Verfahren nach einem der vorhergehenden Ansprüche, **dadurch gekennzeichnet, dass** der Verfahrensschritt (V6) des Bestimmens der ersten Flussrate durch die erste Reinigungseinrichtung (41, 42, 43) auch basierend auf Schaltstellungen der Ausgabeanschlüsse (32_1, 32_2, 32_3) der Fluidverteilungseinrichtung (30) erfolgt.

6. Verfahren nach einem der vorhergehenden Ansprüchen, **dadurch gekennzeichnet, dass** der Verfahrensschritt (V6) des Bestimmens der ersten Flussrate durch die erste Reinigungseinrichtung (41, 42, 43) auch basierend auf einer ersten Umsetzungstabelle erfolgt, die die Verhältnisse der Flussraten durch die den jeweiligen Reinigungseinrichtungen (41, 42, 43) zugeordneten Leitungspfaden (51, 52, 53, 41, 42, 43) in Abhängigkeit von Fluiddrücken angibt, die von der Fluidfördereinrichtung (10) bereitgestellt werden.

7. Verfahren nach einem der vorhergehenden Ansprüchen, **dadurch gekennzeichnet, dass** der Verfahrensschritt (V6) des Bestimmens der ersten Flussrate durch die erste Reinigungseinrichtung (41, 42, 43) auch basierend auf zumindest einer zweiten Umsetzungstabelle erfolgt, wobei in einer zweiten Umsetzungstabelle die prozentualen Flussraten durch die den jeweiligen Reinigungseinrichtungen (41, 42, 43) zugeordneten Leitungspfaden (51, 52, 53, 41, 42, 43) für alle Permutationen von Schaltstellungen sämtlicher Ausgabeanschlüsse (32_1, 32_2, 32_3) der Fluidverteilungseinrichtung (30) für einen von der Fluidfördereinrichtung (10) bereitgestellten Fluiddruck angegeben sind.

8. Verfahren nach einem der vorhergehenden Ansprüchen, **dadurch gekennzeichnet, dass** der Verfahrensschritt (V7) des Bestimmens des ersten Druckverlustes auch unter Berücksichtigung der von der Fluidfördereinrichtung (10) geförderten Gesamtflussrate erfolgt.

9. Verfahren nach einem der vorhergehenden Ansprüchen, **dadurch gekennzeichnet, dass** bei dem Verfahrensschritt (V2) des Ermittelns von zumindest einem Drucksollwert für zumindest eine erste Reinigungseinrichtung (41, 42, 43) zusätzlich zumindest ein weiter Drucksollwert für zumindest eine zweite Reinigungseinrichtung (41, 42, 43) ermittelt wird und ein basierend auf diesen ermittelten Drucksollwerten berechneter Wert als Drucksollwert übernommen wird.

10. Reinigungssystem für Kraftfahrzeugkomponenten (S1, S2, S3), aufweisend:
- eine Fluidfördereinrichtung (10);
- einen Drucksensor (20) zum Bestimmen eines von der Fluidfördereinrichtung (10) erzeugten Drucks;
- eine Fluidverteilungseinrichtung (30) mit zumindest einem mit der Fluidfördereinrichtung (10) fluidverbundenen Eingangsanschluss (31) und mit zumindest zwei mit dem Eingangsanschluss (31) fluidverbundenen Ausgabeanschlüssen (32_1, 32_2, 32_3), wobei jeder Ausgabeanschluss (32_1, 32_2, 32_3) zwischen einer Offenstellung und einer Schließstellung verstellbar ist;
- zumindest zwei jeweils über eine Fluidleitung (51, 52, 53) mit jeweils einem Ausgabeanschluss (32_1, 32_2, 32_3) fluidverbundenen Reinigungseinrichtungen (41, 42, 43); und
- eine Steuerungseinrichtung (60), die mit der Fluidfördereinrichtung (10) und der Fluidverteilungseinrichtung (30) zum Übertragen und/oder Empfangen von Signalen datengekoppelt ist,
wobei das Reinigungssystem **dadurch gekennzeichnet ist, dass** die Steuerungseinrichtung (60) dazu ausgebildet ist, ein Verfahren nach einem der Ansprüche 1 bis 9 auszuführen.

11. Kraftfahrzeug mit zumindest zwei Kraftfahrzeugkomponenten (S1, S2, S3) und mit einem Reinigungssystem zum Reinigen der Kraftfahrzeugkomponenten (S1, S2, S3) nach Anspruch 10.

## Claims

1. A method of controlling a cleaning system for motor vehicle components (S1, S2, S3), the cleaning system comprising:
- a fluid delivery device (10);
- a pressure sensor (20) for determining a pressure generated by the fluid delivery device (10);
- a fluid distribution device (30) with at least one input port (31) fluidly connected to the fluid delivery device (10) and with at least two output port (32_1, 32_2, 32_3) fluidly connected to the input port (31), wherein each output port (32_1, 32_2, 32_3) is adjustable between an open position and a closed position;
- at least two cleaning devices (41, 42, 43), each fluidly connected via a fluid line (51, 52, 53) to a respective output port (32_1, 32_2, 32_3); and
- a control device (60) which is data-coupled to the fluid delivery device (10) and the fluid distribution device (30) for transmitting and/or receiving signals,
wherein the method comprises the following process steps:
- determining (V1) a cleaning request for all cleaning devices (41, 42, 43);
- determining (V2) a pressure setpoint for at least one first cleaning device (41, 42, 43);
- adjusting (V3) the output ports (32_1, 32_2, 32_3) of the fluid distribution device (30) in their open position or in their closed position according to the cleaning request;
- determining (V4) of an actual fluid pressure generated by the fluid delivery device (10);
wherein the method is **characterized by** the following process steps:
- determining (V5) a total flow rate delivered by the fluid delivery device (10) based on the actual fluid pressure;
- determining (V6) a first flow rate through the first cleaning device (41, 42, 43) based on the total flow rate;
- determining (V7) a first pressure loss in a line path (54, 30, 51, 52, 53, 41, 42, 43) via which the first cleaning device (41, 42, 43) is fluidly connected to the fluid delivery device (10), taking into account the first flow rate;
- determining (V8) a pressure control value based on the pressure setpoint and the first pressure loss; and
- adjusting (V9) of the fluid delivery device (10) in such a way that a fluid pressure provided by the fluid delivery device (10) is changed in the direction of the pressure control value.

2. Method according to claim 1, **characterized in that** the method step (V5) of determining a total flow rate delivered by the fluid delivery device (10) is carried out using power level information of the fluid delivery device (10).

3. Method according to one of the preceding claims, **characterized in that** the method step (V5) of determining a total flow rate delivered by the fluid delivery device (10) is carried out using a characteristic diagram of the fluid delivery device (10) which indicates the total flow rate which can be achieved by the fluid delivery device (10) as a function of the fluid pressure for different power levels of the fluid delivery device (10).

4. Method according to one of the preceding claims, **characterized in that** the fluid delivery device (10) is set to the lowest power level at which the pressure control value can be achieved by the fluid delivery device (10).

5. Method according to one of the preceding claims, **characterized in that** the method step (V6) of determining the first flow rate through the first cleaning device (41, 42, 43) is also carried out based on switching positions of the output ports (32_1, 32_2, 32_3) of the fluid distribution device (30).

6. Method according to one of the preceding claims, **characterized in that** the method step (V6) of determining the first flow rate through the first cleaning device (41, 42, 43) is also carried out based on a first conversion table indicating the ratios of the flow rates through the line paths (51, 52, 53, 41, 42, 43) assigned to the respective cleaning devices (41, 42, 43) as a function of fluid pressures provided by the fluid delivery device (10).

7. Method according to one of the preceding claims, **characterized in that** the method step (V6) of determining the first flow rate through the first cleaning device (41, 42, 43) is also carried out based on at least one second conversion table, wherein in a second conversion table the percentage flow rates are determined by the line paths (51, 52, 53, 41, 42, 43) assigned to the respective cleaning devices (41, 42, 43) for all permutations of switching positions of all output ports (32_1, 32_2, 32_3) of the fluid distribution device (30) for a fluid pressure provided by the fluid delivery device (10).

8. Method according to one of the preceding claims, **characterized in that** the method step (V7) of determining the first pressure loss is also carried out taking into account the total flow rate delivered by the fluid delivery device (10).

9. Method according to one of the preceding claims, **characterized in that** in the method step (V2) of determining at least one pressure setpoint for at least one first cleaning device (41, 42, 43), at least one further pressure setpoint for at least one second cleaning device (41, 42, 43) is additionally determined and a value calculated on the basis of these determined pressure setpoints is adopted as the pressure setpoint.

10. Cleaning system for motor vehicle components (S1, S2, S3), comprising:
- a fluid delivery device (10);
- a pressure sensor (20) for determining a pressure generated by the fluid delivery device (10);
- a fluid distribution device (30) with at least one input port (31) fluidly connected to the fluid delivery device (10) and with at least two output ports (32_1, 32_2, 32_3) fluidly connected to the input port (31), wherein each output port (32_1, 32_2, 32_3) is adjustable between an open position and a closed position;
- at least two cleaning devices (41, 42, 43), each fluidly connected via a fluid line (51, 52, 53) to a respective output port (32_1, 32_2, 32_3); and
- a control device (60) which is data-coupled to the fluid delivery device (10) and the fluid distribution device (30) for transmitting and/or receiving signals,
wherein the cleaning system is **characterized in that** the control device (60) is designed to carry out a method according to one of the claims 1 to 9.

11. Motor vehicle with at least two motor vehicle components (S1, S2, S3) and with a cleaning system for cleaning the motor vehicle components (S1, S2, S3) according to claim 10.

## Revendications

1. Procédé pour la commande d'un système de nettoyage de composants de véhicule automobile (S1, S2, S3), dans lequel le système de nettoyage présente les éléments suivants :
- un dispositif de transport de fluide (10) ;
- un capteur de pression (20) permettant de définir une pression générée par le dispositif de transport de fluide (10) ;
- un dispositif de distribution de fluide (30) comportant au moins un raccord d'entrée (31) relié fluidiquement au dispositif de transport de fluide (10) et comportant au moins deux raccords de sortie (32_1, 32_2, 32_3) reliés fluidiquement au raccord d'entrée (31), dans lequel chaque raccord de sortie (32_1, 32_2, 32_3) peut être réglé entre une position ouverte et une position fermée ;
- au moins deux dispositifs de nettoyage (41, 42, 43) reliés fluidiquement à respectivement un raccord de sortie (32_1, 32_2, 32_3) par l'intermédiaire de respectivement une conduite de fluide (51, 52, 53) ; et
- un dispositif de commande (60) qui est couplé par données au dispositif de transport de fluide (10) et au dispositif de distribution de fluide (30) pour la transmission et/ou la réception de signaux,
dans lequel le procédé présente les étapes de procédé suivantes :
- détermination (V1) d'une demande de nettoyage pour tous les dispositifs de nettoyage (41, 42, 43) ;
- détermination (V2) d'une valeur de consigne de pression pour au moins un premier dispositif de nettoyage (41, 42, 43) ;
- réglage (V3) des raccords de sortie (32_1, 32_2, 32_3) du dispositif de distribution de fluide (30) dans leur position ouverte ou dans leur position fermée en fonction de la demande de nettoyage ;
- détermination (V4) d'une pression de fluide réelle qui est générée par le dispositif de transport de fluide (10) ;
dans lequel le procédé est **caractérisé par** les étapes de procédé suivantes :
- définition (V5) d'un débit total transporté par le dispositif de transport de fluide (10) sur la base de la pression de fluide réelle ;
- définition (V6) d'un premier débit à travers le premier dispositif de nettoyage (41, 42, 43) sur la base du débit total ;
- définition (V7) d'une première perte de pression dans un faisceau de conduites (54, 30, 51, 52, 53, 41, 42, 43) par l'intermédiaire duquel le premier dispositif de nettoyage (41, 42, 43) est relié fluidiquement au dispositif de transport de fluide (10), en tenant compte du premier débit ;
- définition (V8) d'une valeur de régulation de pression sur la base de la valeur de consigne de pression et de la première perte de pression ; et
- réglage (V9) du dispositif de transport de fluide (10) de telle sorte qu'une pression de fluide fournie par le dispositif de transport de fluide (10) est modifiée en direction de la valeur de régulation de pression.

2. Procédé selon la revendication 1, **caractérisé en ce que** l'étape de procédé (V5) de définition d'un débit total transporté par le dispositif de transport de fluide (10) est effectuée à l'aide d'une information de niveau de puissance du dispositif de transport de fluide (10).

3. Procédé selon l'une des revendications précédentes,
**caractérisé en ce que** l'étape de procédé (V5) de définition d'un débit total transporté par le dispositif de transport de fluide (10) est effectuée à l'aide d'un diagramme caractéristique du dispositif de transport de fluide (10), lequel diagramme caractéristique indique, pour différents niveaux de puissance du dispositif de transport de fluide (10), le débit total pouvant être obtenu par le dispositif de transport de fluide (10) en fonction de la pression de fluide.

4. Procédé selon l'une des revendications précédentes,
**caractérisé en ce que** le dispositif de transport de fluide (10) est réglé sur le niveau de puissance le plus bas auquel la valeur de régulation de pression peut être obtenue par le dispositif de transport de fluide (10).

5. Procédé selon l'une des revendications précédentes,
**caractérisé en ce que** l'étape de procédé (V6) de définition du premier débit à travers le premier dispositif de nettoyage (41, 42, 43) est effectuée également sur la base de positions de commutation des raccords de sortie (32_1, 32_2, 32_3) du dispositif de distribution de fluide (30).

6. Procédé selon l'une des revendications précédentes,
**caractérisé en ce que** l'étape de procédé (V6) de définition du premier débit à travers le premier dispositif de nettoyage (41, 42, 43) est également effectuée sur la base d'un premier tableau de conversion qui indique les rapports des débits à travers les voies de conduite (51, 52, 53, 41, 42, 43) associées aux dispositifs de nettoyage (41, 42, 43) respectifs en fonction de pressions de fluide fournies par le dispositif de transport de fluide (10).

7. Procédé selon l'une des revendications précédentes,
**caractérisé en ce que** l'étape de procédé (V6) de définition du premier débit à travers le premier dispositif de nettoyage (41, 42, 43) est également effectuée sur la base d'au moins un second tableau de conversion, dans lequel les pourcentages de débits à travers les voies de conduite (51, 52, 53, 41, 42, 43) associées aux dispositifs de nettoyage (41, 42, 43) respectifs pour toutes les permutations de positions de commutation de tous les raccords de sortie (32_1, 32_2, 32_3) du dispositif de distribution de fluide (30) pour une pression de fluide fournie par le dispositif de transport de fluide (10) sont indiqués dans un second tableau de conversion.

8. Procédé selon l'une des revendications précédentes,
**caractérisé en ce que** l'étape de procédé (V7) de définition de la première perte de pression est également effectuée en tenant compte du débit total transporté par le dispositif de transport de fluide (10).

9. Procédé selon l'une des revendications précédentes,
**caractérisé en ce que,** lors de l'étape de procédé (V2) de détermination d'au moins une valeur de consigne de pression pour au moins un premier dispositif de nettoyage (41, 42, 43), au moins une autre valeur de consigne de pression pour au moins un second dispositif de nettoyage (41, 42, 43) est en outre déterminée et une valeur calculée sur la base desdites valeurs de consigne de pression déterminées est prise comme valeur de consigne de pression.

10. Système de nettoyage pour des composants de véhicule automobile (S1, S2, S3), présentant :
- un dispositif de transport de fluide (10) ;
- un capteur de pression (20) permettant de définir une pression générée par le dispositif de transport de fluide (10) ;
- un dispositif de distribution de fluide (30) comportant au moins un raccord d'entrée (31) relié fluidiquement au dispositif de transport de fluide (10) et comportant au moins deux raccords de sortie (32_1, 32_2, 32_3) reliés fluidiquement au raccord d'entrée (31), dans lequel chaque raccord de sortie (32_1, 32_2, 32_3) peut être réglé entre une position ouverte et une position fermée ;
- au moins deux dispositifs de nettoyage (41, 42, 43) reliés fluidiquement à respectivement un raccord de sortie (32_1, 32_2, 32_3) par l'intermédiaire de respectivement une conduite de fluide (51, 52, 53) ; et
- un dispositif de commande (60) qui est couplé par données au dispositif de transport de fluide (10) et au dispositif de distribution de fluide (30) pour la transmission et/ou la réception de signaux,
dans lequel le système de nettoyage est **caractérisé en ce que** le dispositif de commande (60) est configuré pour exécuter un procédé selon l'une des revendications 1 à 9.

11. Véhicule automobile comportant au moins deux composants de véhicule automobile (S1, S2, S3) et comportant un système de nettoyage pour le nettoyage des composants de véhicule automobile (S1, S2, S3) selon la revendication 10.
